# EUROPÄISCHE PATENTSCHRIFT

(11) **EP 0 362 461 B1**
(45) Veröffentlichungstag und Bekanntmachung des Hinweises auf die Patenterteilung: **05.05.1993**
(21) Anmeldenummer: 89104368.9
(22) Anmeldetag: 11.03.1989
(51) Int. Cl.: A22C 25/18, A22C 25/17

(54) **Stückenschneideinrichtung für Fischfilets**
Method and device for slicing fillets of fish
Procédé et dispositif pour découper des filets de poisson

(30) Priorität: 05.10.1988 DE 3833866; 04.02.1989 DE 3903328
(43) Veröffentlichungstag der Anmeldung: 11.04.1990
(73) Patentinhaber: NORDISCHER MASCHINENBAU RUD. BAADER GMBH + CO KG, 23560 Lübeck (DE)
(72) Erfinder: Grosseholz, Werner Dipl.-Ing., D-2400 Lübeck (DE); Schmüser, Dirk, D-2407 Sereetz (DE); Wenzel, Werner Dipl.-Ing.,, D-2400 Lübeck (DE)

(56) Entgegenhaltungen:
- WO-A-86/03376
- WO-A-87/00007
- DE-A- 2 949 631
- DE-A- 3 433 059
- DE-B- 3 014 936
- FR-A- 821 540
- GB-A- 1 463 262
- US-A- 1 682 418
- US-A- 2 234 658
- US-A- 4 557 019

## Beschreibung

Die Erfindung betrifft ein Verfahren zum Aufteilen von nichtenthäuteten Fischfilets in Filetstücke.

Eine klassische Vorrichtung zum Aufteilen von Fischen in quergeschnittene Stücke ist aus der DE-PS 690 357 entnehmbar. Bei dieser Vorrichtung werden Fischrümpfe in einem lotrecht angeordneten und längs einer Seite durch federnde Lamellen abgedeckten Aufnahmebehälter eingebracht, der mit Querschlitzen versehen ist, durch welche Mitnehmerblätter eintauchen und den Fischrumpf hinterfassen. Dadurch wird dieser gegen die federnden Lamellen quer zu seiner Längsachse aus dem Aufnahmebehälter herausgedrängt und gegen eine Reihe von Kreismessern bewegt, deren Abstände zueinander den gewünschten Stückenlängen entsprechen.

Mit einer derartigen Vorrichtung lassen sich Filets aufgrund ihrer weichen Konsistenz nicht verarbeiten.

Die maschinelle Handhabung von Filets zum Zwecke der Herstellung von Filetsstücken ist durch Anwendung eines Verfahrens möglich, welches Gegenstand der DE-A-21 46 352 ist. Dieses Verfahren besteht darin, daß ein aus sich überlappend angeordneten Filets bestehender, auf einer Transportbahn geformter Filetstrang durch Querschnitte in Stücke geschnitten wird, und daß diese dann aus der Transportbahn in eine Verpackung überführt werden. Dabei besteht die Maschine aus auf einer Fördereinrichtung in einer Reihe angebrachten, den Filetstrang aufnehmenden Tragelementen mit Querschlitzen. Die Tragelemente werden einer Schneidstation aus einem Satz Kreismesser zugeführt, die in die Querschlitze eintauchen, worauf die Tragelemente unter Umwendung über eine bereitgestellte Verpackung ausgeschwenkt und die Filetstücke abgelegt werden.

Dieses Verfahren genügt den heutigen Anforderungen, insbesondere hinsichtlich der Durchsatzleistung, in keiner Weise. Auch ist die mangelnde Veränderbarkeit der Stückenlänge als nachteilig anzuführen.

Aus der DE-A-29 49 631 ist weiter eine Vorrichtung zum Enthäuten von Fisch-Doppelfilets bekannt, bei der eine Vorschäleinrichtung Verwendung findet, die vor dem Enthäuteaggregat angeordnet ist und über einem Förderband gelegen ein Paar zueinander paralleler Messer umfaßt, die in Förderrichtung der in Richtung ihrer Längsachse geförderten Filets ausgerichtet und mit Schneiden versehen sind, die unter Belassen eines der Hautstärke der Filets entsprechenden Abstandes gegen die Förderfläche des Förderbandes weisen. Die zu enthäutenden Doppelfilets werden auf der Förderfläche so ausgerichtet aufgelegt, daß ihre Rückenlinie zwischen den Messern hindurchläuft, so daß Einschnitte bis an die Haut entstehen, die bewirken, daß das durch Enthäuten entstehende Produkt aus zwei Einzelfilets und einem die Flossenhalter umfassenden Abfallstreifen besteht.

Das entsprechend dem letztgenannten Stand der Technik zum Enthäuten vorbereitete Doppelfilet kann auch mit einer Enthäutevorrichtung nach der DE-A-34 33 059 enthäutet werden, welche Vorrichtung geeignet ist, die von einer Filetiermaschine produzierten Doppelfilets automatisch zu übernehmen.

Beide letzterwähnten Vorrichtungen sind eingerichtet zur Erzeugung von Einzelfilets aus Doppelfilets, eine Aufteilung der Filets in Filetstücke ist damit nicht möglich.

Es ist die Aufgabe der Erfindung, ein Verfahren zum Aufteilen der Filets von Fischen anzugeben, dessen Leistungsfähigkeit eine Integration einer dementsprechend konzipierten Vorrichtung in eine vollautomatisch arbeitende Filetierlinie ermöglicht und dabei hinsichtlich der Stückenlänge auf einfache Weise einstellbar ist.

Diese Aufgabe wird erfindungsgemäß durch ein Verfahren gelöst, welches dadurch gekennzeichnet ist, daß die Fischfilets mit quer zu deren Längsrichtung verlaufenden Einschnitten versehen werden, wobei die Haut zusammenhängend belassen bleibt, und daß die Filets anschließend enthäutet werden. Dabei kann so vorgegangen werden, daß die Einschnitte von der Fleischseite her bis im wesentlichen an die Innenseite der Haut heran geführt werden, wobei der Abstand der Schnitte zueinander der gewünschten Stückenlänge der Filetstücke entspricht, und daß die so vorbereiteten Filetstücke anschließend durch Enthäuten vereinzelt werden.

Speziell für die Bearbeitung von Doppelfilets, d. h. solchen, bei denen die beiden Filets an der Rückenlinie zusammenhängend belassen und zu beiden Seiten und längs derselben bis an die Haut eingeschnitten sind, kann das Verfahren dahingehend modifiziert werden, daß Einschnitte im wesentlichen senkrecht zu der Rückenlinie verlaufend und unter Durchtrennen des Fleisches und der Haut eingebracht werden, wobei lediglich der nähere Bereich der Rückenlinie ungeschnitten belassen bleibt.

Zur Durchführung des allgemeinen Verfahrens erweist sich eine Einrichtung als besonders geeignet, welche eine einer Enthäutevorrichtung vorgeschaltete Schneideinrichtung aufweist, die ein Paar übereinander angeordneter, um zueinander parallele Achsen gegensinnig umlaufend angetriebener und sich gegensinnig unter definiertem Ausdruck berührender Walzen umfaßt, wobei die eine Walze als Messerwalze mit sich im wesentlichen radial erstreckenden Messerklingen ausgebildet ist, deren Schneiden in einer zylindrischen Mantelfläche liegen, und wobei die andere Walze eine elastische Oberfläche aufweist.

Mittels einer derartigen Schneideinrichtung ist praktisch jede Enthäutemaschine für Fischfilets zu einem Stückenschneider umfunktionierbar.

Im Hinblick auf eine Steuerung der Lage des ersten Stückenschnittes in bezug auf seinen Abstand zu dem vorauslaufenden Ende des Filets kann eine Überwachungseinrichtung vorgesehen sein, die die jeweilige Position des vorauslaufenden Endes des Filets registriert und entsprechende Steuersignale abgibt. Die Auswertung derselben kann dadurch erfolgen, daß die Messerwalze einen regelbaren Antrieb aufweist, welcher so in Abhängigkeit von der Lage des vorauslaufenden Endes des jeweils zu bearbeitenden Filets bezüglich seiner Drehgeschwindigkeit zeitlich begrenzt geregelt wird.

Für die Durchführung des für die Bearbeitung von Doppelfilets modifizierten Verfahrens eignet sich eine Enthäutevorrichtung, der eine Schneideinrichtung vorgeschaltet ist, die mindestens je ein zu beiden Seiten des Förderers des Doppelfilets wirksames, umlaufend angetriebenes Schlagmesser umfaßt, wobei die Rotationsachsen im wesentlichen parallel zu der Förderebene des Förderers ausgerichtet und so angeordnet sind, daß die Umlaufflächen der Schlagmesser im Bereich ihrer gegenseitigen größten Annäherung einen Abstand belassen, der sich symmetrisch zu dem Förderer des Doppelfilets erstreckt. Ein solcher Förderer kann ein Paar endloser, umlaufend angetriebener schmaler Gurte umfassen, welche in Rillen einer Stützschiene geführt sind und in Einschnitte zu beiden Seiten der Rückenlinie in das Doppelfilet eintauchen, um die Haut in diesem Bereich zwischen sich und der Stützschiene fördernd zu erfassen. Um eine schlupfarme Förderung des Doppelfilets zu erzielen, kann den Gurten gegenüberliegend ein mit diesen sychron angetriebener Flachgurt vorgesehen sein. Eine Anordnung der Schlagmesser so, daß sie in die Flanken der Stützschiene für die Führung und Stützung der Gurte eintauchend umlaufen, sichert eine vollständige Trennung der Fleischteile beim Anbringen der Stückenschnitte. Eine Regelbarkeit der Umlaufgeschwindigkeit der Schlagmesser macht eine Einstellung der Stückenlänge auf einfache Weise möglich.

Auch hier kann die Steuerung der Lage des ersten Stückenschnittes in bezug auf seinen Abstand zu dem vorauslaufenden Ende des Doppelfilets durch eine Überwachungseinrichtung zur Registrierung der jeweiligen Verhältnisse erfolgen.

Die Auswertung kann dadurch erfolgen, daß die Schlagmesser jeweils regelbare Antriebe aufweisen, welche so in Abhängigkeit von der Lage des vorauslaufenden Endes des jeweils zu bearbeitenden Filets bezüglich ihrer Drehgeschwindigkeit zeitlich begrenzt regelbar sind.

Ein besonderer wirtschaftlicher Vorteil ist erzielbar, wenn die Einrichtung mit ihrem Förderer an den Ausgangsbereich einer Filetiermaschine anschließend angeordnet wird. Der Vorteil liegt dabei darin, daß die Filets in ausgerichtetem Zustand, d. h. ohne zusätzlichen Ausrichtaufwand unter automatischer Anpassung der Durchsatzleistung an die Filetiermaschine der erfindungsgemäßen Einrichtung zugeführt werden können.

Die Erfindung wir nachfolgend anhand von in der Zeichnung dargestellten Ausführungsbeispielen näher erläutert. Es zeigen
- Fig. 1: eine vereinfachte Darstellung einer stückenschneidenden Enthäutevorrichtung in axonometrischer Ansicht,
- Fig. 2: einen Querschnitt im Bereich der Schneideinrichtung aus Fig. 1 längs der Schnittlinie II - II ,
- Fig. 3: eine Variante der Stückenschneideinrichtung in Verbindung mit einer Enthäutevorrichtung einer anderen Bauart, ebenfalls in axonometrischer Ansicht.

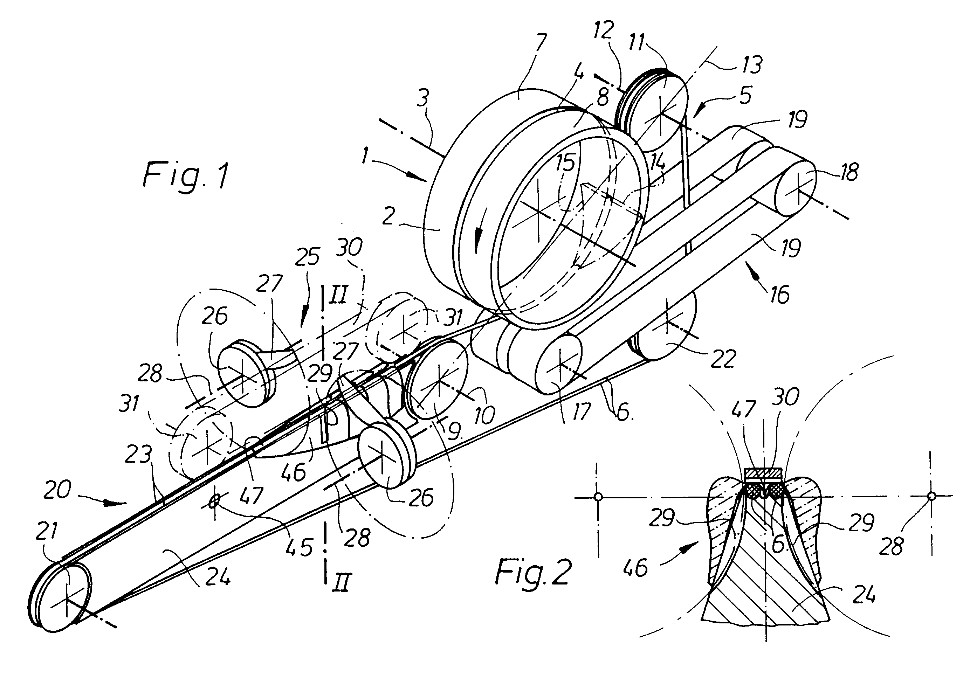

Die an sich bekannte und erfindungsgemäß erweiterte Enthäutevorrichtung ist gemäß Fig. 1 mit einer in einem nicht dargestellten Gestell angeordneten, um eine horizontale Achse 3 auf geeignete Weise entsprechend dem Drehrichtungspfeil umlaufend angetriebene Trommel 1 ausgestattet. Die Trommel 1 weist eine Umfangsfläche 2 auf, die mittig durch eine Spurrille 4 für die Aufnahme eines Endlosgurtes 5 aus zwei Rundriemen 6 in zwei Mantelflächen 7 und 8 geteilt ist, die eine griffige Oberflächengestaltung aufweisen können. Die beiden Rundriemen 6 werden durch je eine vor und hinter der Trommel 1 angeordnete zweirillige Rillenscheibe 9 bzw. 11 geführt, die so angeordnet sind, daß die Verbindungslinie 13 ihrer Achsen 10 bzw. 12 Sekante in bezug auf den Umfangskreis der Trommel 1 ist. Die Rundriemen 6 umschlingen daher die Trommel 1 auf einem nach unten weisenden Teil ihres Umfanges, wobei die Rundriemen 6 mit ihrer Außenseite dem Grund der Spurrille 4 zugekehrt in dieser geführt werden. Im Bereich der Umschlingung ist in geringem Abstand über der Umfangsfläche 2 der Trommel 1 ein Enthäutewerkzeug 14 ortsfest angeordnet, welches ein Paar pflugartig zueinander verlaufender Schneiden 15 aufweist, die sich der Umfangsfläche 2 anschmiegend geformt sind. Das Enthäutewerkzeug 14 wird durch Andrückmittel 16 , bestehend aus zwei im Bereich der Spurrille 4 geteilten, querelastischen und flexiblen Flachgurten 19 überdeckt , die um Umlenkwalzen 17 und 18 umgelenkt und so geführt sind, daß sie an der Trommel 1 mindestens im Bereich des Enthäutewerkzeuges 14 anliegen.

Die beiden Rundriemen 6 sind durch Umlenkung über zwei weitere Rillenscheiben 21 und 22 endlos geführt und bilden einen Förderer 20 für die Doppelfilets. Die Rillenscheibe 21 ist der Rillenscheibe 9 vorgelagert und so angeordnet, daß der sich zwischen diesen erstreckende Obertrum 23 der Rundriemen 6 im wesentlichen horizontal verläuft, wobei diese in Rillen einer Stützschiene 24 mit leicht dachförmigem Querschnitt unterstützt geführt sind.

Gemäß Fig. 1 ist in dem Bereich zwischen den beiden Rillenscheiben 9 und 21 eine Schneideinrichtung 25 installiert, die ein Paar zu beiden Seiten der Stützschiene 24 angeordneter Schlagmesser 26 umfaßt. Die Schlagmesser 26 werden je durch eine Messerklinge 27 gebildet, die jeweils um eine Rotationsachse 28 umlaufend angeordnet sind, die sich parallel zu dem Obertrum 23 des Förderers 20 und mit diesem in einer horizontalen Ebene erstrecken. Der Antrieb der Schlagmesser 26 erfolgt in geeigneter Weise so, daß die Drehzahl derselben einstellbar ist. Die Position der Rotationsachsen 28 der Schlagmesser 26 ist so gewählt, daß die Messerklingen 27 in die Flanken der Stützschiene 24 eintauchen, zu welchem Zweck entsprechende Eintauchtaschen 29 in den Flanken vorgesehen sind. Dem Obertrum 23 des Förderers 20 liegt ein endloser Flachgurt 30 gegenüber, der um zwei Umlenkrollen 31 geführt synchron mit dem Förderer 20 umlaufend angetrieben und auf geeignete Weise elastisch gegen dessen Obertrum 23 angedrückt gehalten wird. Der Flachgurt 30 ist aus Gründen der Griffigkeit beispielsweise als Zahnriemen ausgebildet und von einer Breite, die seinen Untertrum zwischen den Umlaufebenen der Messerklingen 27 gerade freigehen läßt.

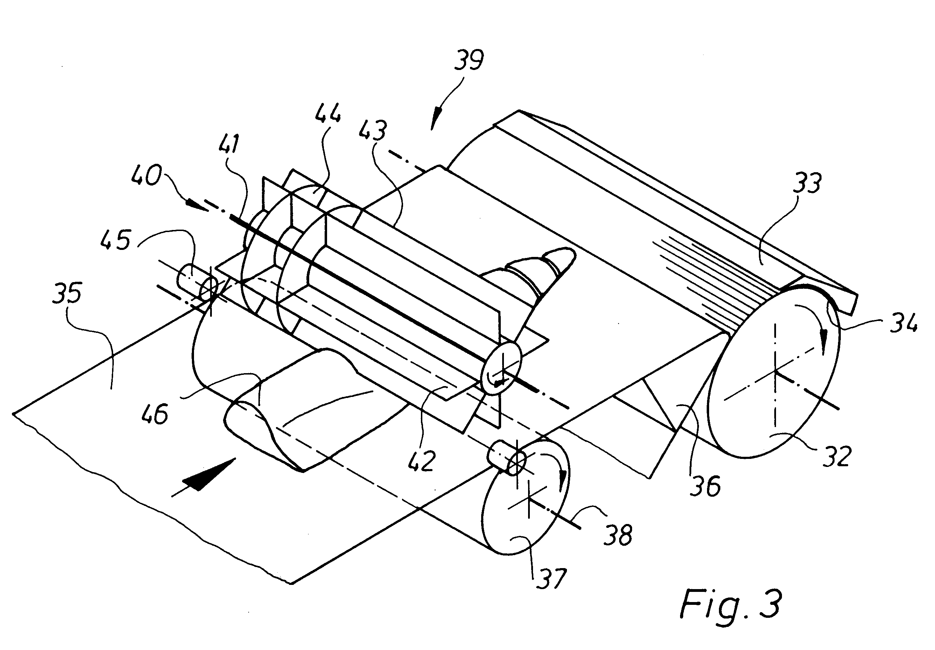

Die Einrichtung nach Fig. 3 baut auf einer ebenfalls zum Stand der Technik gehörenden Enthäutevorrichtung auf, umfassend eine Enhäutewalze 32, ein deren durch Längsnuten griffig gestaltete Mantelfläche in geringem Abstand gegenüberliegendes Enthäutemesser 33 , dessen der Mantelfläche zuweisende Fläche als Andrückfläche 34 ausgebildet ist, und eine Fördereinrichtung mit einem endlosen Förderband 35 , welches unmittelbar vor der Mantelfläche der Enthäutewalze 32 um einen Führungskeil 36 in den rücklaufenden Trum umgelenkt wird. Die Enthäutewalze 32 und das Förderband 35 sind auf geeignete Weise gleichsinnig umlaufend angetrieben. Der Arbeitstrum des Förderbandes 35 ist vor der durch den Führungskeil 36 gebildeten Umlenkstelle durch eine Stützwalze 37 unterstützt, deren Achse 38 parallel zu der der Enthäutewalze 32 verläuft und die mit einem elastischen Mantel versehen sein kann. Die Stützwalze 37 wird zweckmäßigerweise ebenfalls angetrieben, wobei deren Umfangsgeschwindigkeit der Fortschrittsgeschwindigkeit des Förderbandes 35 entsprechend vorgesehen ist. Der Stützwalze 37 liegt das Förderband 35 zwischen sich belassend eine Messerwalze 40 gegenüber, die um eine zu der Achse 38 paralle Achse 41 synchron gegenläufig zu der Stützwalze 37 umlaufend angetrieben und gegen diese federnd angedrückt gehalten ist. Die Messerwalze 40 ist mit im wesentlichen radial ausgerichteten, sich achsparallel erstreckenden und unter gleicher Teilung angeordneten Messerklingen 41 versehen, deren Schneiden 42 in einer zu der Achse 38 konzentrischen Hüllfläche liegen, und die durch radiale Ringschneiden 44 unterbrochen sein können.

Die Funktion der erfindungemäßen Einrichtung wird nachfolgend unter Verfolgung eines Filets 46 beschrieben, das mit der Haut nach unten auf den jeweiligen Fördermitteln aufgelegt wurde:
In Betrachtung zunächst der Einrichtung nach Fig. 1 gelangt das Filet 46 , hier in Form eines Doppelfilets, das von der Fleischseite her zu beiden Seiten und längs der Rückenlinie bis an die Haut eingeschnitten ist, in den Einzugsbereich zwischen dem Förderer 20 und dem Flachgurt 30 und wird auf diese Weise sicher eingespannt der Schneideinrichtung 25 zugeführt. Dabei gelangen die an den Flanken der Stützschiene 24 herabhängenden Filetteile in den Wirkungsbereich der Schlagmesser 26 , die im kontinuierlichen Vorbeigang der Doppelfilets Einschnitte in diese einbringen. Das Eintauchen der Messerklingen 27 in die Eintauchtaschen 29 in den Flanken der Stützschiene 24 bewirkt dabei eine Trennung auch der Haut. Der Enthäutevorrichtung wird daher ein Doppelfilet zugeleitet, dessen Filetteile bis an den Bereich der Rückenlinie mit Einschnitten versehen sind, deren Abstand sich aus der Drehzahl der Schlagmesser 26 im Verhältnis zur Fortschrittgeschwindigkeit des Doppelfilets herleitet. Dieses gelangt zunächst in den Bereich der Auflaufstelle der Rundriemen 6 auf die Trommel 1, nach dessen Passieren die Haut zwischen dem Grund der Spurrille 4 der Trommel 1 und den Rundriemen 6 einklemmt und damit sicher gefaßt ist. Währenddessen haben die Flachgurte 19 die beidseitig der Rückenlinie befindlichen Filetteile an die Mantelflächen 7 und 8 der Trommel 1 angeschmiegt, so daß das Doppelfilet unter Stützung durch die Flachgurte 19 das Enthäutewerkzeug 14 erreicht, dessen Schneiden 15 von den Trennschnitten längs der Rückenlinie beginnend nach außen die Haut von den Filetteilen abspaltet. Da diese aufgrund der Vorbereitung in der Schneideinrichtung 25 in Stücken auf der Haut aufliegen, fallen die Filets als enthäutete Filetstücke an.

Bei der Einrichtung nach Fig. 3 wird das Filet auf dem Förderband 35 aufliegend der Schneideinrichtung 39 zugeführt mit der Folge, daß die Messerklingen 42 der Messerwalze 40 in das Filetfleisch eindringen. Dabei wird das Fleisch bis an die Haut geteilt. Dank der Elastizität des Förderbandes 35 bzw. der Mantelfläche der Stützwalze 37 bleibt die Haut unverletzt, so daß das Enthäuten in üblicher Weise vorsichgeht, aber enthäutete Filetstücke erzeugt, die auch Würfelform annehmen können, wenn die Messerwalze 40 zusätzlich mit Ringschneiden 44 versehen ist.

Die Stückenlange kann bei dieser Einrichtung durch Einsatz verschiedener Messerwalzen 40 variiert werden, die zu diesem Zweck leicht auswechselbar angebracht sind und sich voneinander durch unterschiedliche Teilung der Messerklingen 42 unterscheiden. Bei der Einrichtung nach Fig. 1 kann die Stückenlänge durch Verstellen der Drehzahl der Schlagmesser 26 eingestellt werden.

Um jeweils bereits den ersten Stückenschnitt in einer Stückenlänge zu erzeugen, die den durch die Folgeschnitte erzielten Stückenlängen entspricht, kann eine Steuereinrichtung vorgesehen sein, die beispielsweise eine Lichtschranke 45 zur Registrierung des vorauslaufenden Endes des Filets 46 und einen mit dem jeweiligen Förderer gekoppelten Taktgeber umfaßt, sowie den Antrieb der Messerwalze 40 bzw. der Schlagmesser 26 mittels eines Schrittmotors vorsieht. Das jeweilige Signal der Lichtschranke 45 kann dann mit einem von dem Schrittmotor pro Umdrehung abgegebenen, mit der Umlaufstellung der Messerklingen 42 bzw. 27 der Messerwalze 40 bzw. der Schlagmesser 26 synchronisierten Referenzsignal in Beziehung gesetzt und daraus eine Regelgröße für eine zeitlich begrenzte Veränderung der Umlaufgeschwindigkeit hergeleitet werden, um die Ankunft des vorauslaufenden Endes des Filets 46 mit dem Aktionszeitpunktes einer Messerklinge 42 bzw. 27 in zeitliche Übereinstimmung zu bringen.

### Liste der benutzten Bezeichnungen

- 1: Enthäutevorrichtung
- 2: Trommel
- 3: Achse
- 4: Spurrille
- 5: Endlosgurt
- 6: Rundriemen
- 7: Mantelfläche
- 8: Mantelfläche
- 9: Rillenscheibe
- 10: Achse
- 11: Rillenscheibe
- 12: Achse
- 13: Verbindungslinie
- 14: Enthäutewerkzeug
- 15: Schneide
- 16: Andrückmittel
- 17: Umlenkwalze
- 18: Umlenkwalze
- 19: Flachgurt
- 20: Förderer
- 21: Rillenscheibe
- 22: Rillenscheibe
- 23: Obertrum
- 24: Stützschiene
- 25: Schneideinrichtung
- 26: Schlagmesser
- 27: Messerklinge
- 28: Rotationsachse
- 29: Eintauchtasche
- 30: Flachgurt
- 31: Umlenkrolle
- 32: Enthäutewalze
- 33: Enthäutemesser
- 34: Andrückfläche
- 35: Förderband
- 36: Führungskeil
- 37: Stützwalze
- 38: Achse
- 39: Schneideinrichtung
- 40: Messerwalze
- 41: Achse
- 42: Messerklinge
- 43: Schneide
- 44: Ringschneide

## Patentansprüche

1. Verfahren zum Aufteilen von nicht enthäuteten Fischfilets in Filetstücke, **dadurch gekennzeichnet,** daß die Fischfilets mit quer zu deren Längserstreckung verlaufenden Einschnitten versehen werden, wobei die Haut zusammenhängend belassen bleibt, und daß die Filets anschließend enthäutet werden.

2. Verfahren nach Anspruch 1 , **dadurch gekennzeichnet,** daß die Einschnitte von der Fleischseite her bis im wesentlichen an die Innenseite der Haut heran geführt werden, wobei der Abstand der Schnitte zueinander der gewünschten Stückenlänge der Filetstücke entspricht, und daß die so vorbereiteten Filetstücke anschließend durch Enthäuten vereinzelt werden.

3. Verfahren zum Aufteilen von nicht enthäuteten Fisch-Doppelfilets, bei denen die beiden Filets an der Rückenlinie zusammenhängend belassen und zu beiden Seiten und längs derselben bis an die Haut eingeschnitten sind, **dadurch gekennzeichnet,** daß Einschnitte im wesentlichen senkrecht zu der Rückenlinie verlaufend und unter Durchtrennen des Fleisches und der Haut eingebracht werden, wobei lediglich der nähere Bereich der Rückenlinie ungeschnitten belassen bleibt.

4. Einrichtung zur Durchführung des Verfahrens nach den Ansprüchen 1 oder 2, gekennzeichnet durch eine Enthäutevorrichtung (32,33,34) und eine vorgeschaltete Schneideinrichtung (39), welche ein Paar übereinander angeordnete, um zueinander parallele Achsen gegensinnig umlaufend antreibbare Walzen (37 und 40) umfaßt, die entweder sich gegenseitig oder einen zwischen den Walzen (37 und 40) durchlaufenden Förderer (35) unter definiertem Andruck berühren, wobei eine Walze (40) als Messerwalze mit sich im wesentlichen radial erstreckenden Messerklingen (42) ausgebildet ist, deren Schneiden (43) in einer zylindrischen Mantelfläche liegen, und wobei die andere Walze (37) eine elastische Oberfläche aufweist.

5. Einrichtung nach Anspruch 4 , **dadurch gekennzeichnet.** daß eine Überwachungseinrichtung (45) zur Registrierung der Lage des vorauslaufenden Endes des jeweils zu bearbeitenden Filets (46) vorgesehen ist.

6. Einrichtung nach Anspruch 5 , **dadurch gekennzeichnet,** daß die Messerwalze (40) einen regelbaren Antrieb aufweist, welcher in Abhängigkeit von der Lage des vorauslaufenden Endes des jeweils zu verarbeitenden Filets bezüglich seiner Drehgeschwindigkeit zeitlich begrenzt regelbar ist.

7. Einrichtung zur Durchführung des Verfahrens nach Anspruch 3 , umfassend eine Enthäutevorrichtung (1) mit einem Förderer (20) zum Fördern der Doppelfilets durch Angriff an der Haut im Bereich der Einschnitte längs der Rückenlinie, **dadurch gekennzeichnet,** daß der Enthäutevorrichtung (1) eine Schneideinrichtung (25) vorgeschaltet ist, die mindestens je ein zu beiden Seiten des Förderers (20) wirksames, umlaufend angetriebenes Schlagmesser (26) umfaßt, wobei die Rotationsachsen (28) im wesentlichen parallel zu der Förderebene des Förderers (20) ausgerichtet und so angeordnet sind, daß die Umlaufflächen der Schlagmesser (26) im Bereich ihrer gegenseitigen größten Annäherung einen Abstand belassen, der sich im wesentlichen symmetrisch zu dem Förderer (20) erstreckt.

8. Einrichtung nach Anspruch 7 , **dadurch gekennzeichnet,** daß der Förderer (20) der Schneideinrichtung (25) zugeordnet ist und ein Paar umlaufend angetriebener, schmaler Endlosgurte (5) umfaßt, welche in Rillen einer Stützschiene (24) geführt sind zum fördernden Erfassen der Haut zwischen den Endlosgurten und der Stützschiene durch Eintauchen der Endlosgurte in die Einschnitte zu beiden Seiten der Rückenlinie des Doppelfilets.

9. Einrichtung nach einem der Ansprüche 7 bis 8 , **dadurch gekennzeichnet,** daß mindestens im Bereich der Schneideinrichtung (25) ein dem Paar Endlosgurte (5) gegenüberliegender, synchron angetriebener Flachgurt (30) vorgesehen ist.

10. Einrichtung nach einem der Ansprüche 7 bis 9 , **dadurch gekennzeichnet,** daß die Schlagmesser (26) in die Flanken der Stützschiene (24) eintauchend umlaufbar angeordnet sind.

11. Einrichtung nach einem der Ansprüche 7 bis 10 , **dadurch gekennzeichnet,** daß die Umlaufgeschwindigkeit der Schlagmesser (26) regelbar ist.

12. Einrichtung nach einem der Ansprüche 7 bis 11 , **dadurch gekennzeichnet,** daß eine Überwachungseinrichtung (45) zur Registrierung der Lage des vorauslaufenden Endes des jeweils zu bearbeitenden Doppelfilets (46) vorgesehen ist.

13. Einrichtung nach Anspruch 12 , **dadurch gekennzeichnet,** daß die Schlagmesser (26) jeweils regelbare Antriebe aufweisen, welche in Abhängigkeit von der Lage des vorauslaufenden Endes des jeweils zu bearbeitenden Filets bezüglich ihrer Drehgeschwindigkeit zeitlich begrenzt regelbar sind.

14. Einrichtung nach einem der Ansprüche 4 bis 13 , **dadurch gekennzeichnet,** daß sie mit dem Förderer (20) bzw. mit dem Förderband (35) an den Ausgangsbereich einer Filetiermaschine anschließend angeordnet ist.

## Claims

1. Method for the splitting up of unskinned fish fillets into fillet pieces, characterised thereby that the fish fillets are provided with incisions extending transversely to the longitudinal extent thereof, wherein the skin remains left adhering, and that the fillets are subsequently skinned.

2. Method according to claim 1, characterised thereby that the incisions are led from the flesh side substantially up to the inner side of the skin, wherein the spacing of the cuts relative to one another corresponds to the desired piece length of the fillet pieces, and that the thus prepared fillet pieces are subsequently singled by skinning.

3. Method for the splitting of unskinned fish double fillets, in which the two fillets are left adhering at the dorsal line and are incised at both sides and along the same up to the skin, characterised thereby that incisions extend substantially perpendicularly to the dorsal line and are introduced with severing of the flesh and the skin, wherein merely the adjacent region of the dorsal line remains left uncut.

4. Equipment for the carrying out of the method according to claim 1 or claim 2, characterised by a skinning device (32, 33, 34) and an upstream cutting equipment (39), which comprises a pair of rollers (37 and 40), which are arranged one above the other, are drivable to rotate in opposite sense about mutually parallel axes and which either mutually contact or contact with defined pressure a conveyor (35) running through between the rollers (37 and 40), wherein one roller (40) is constructed as a knife roller with substantially radially extending knife blades (42), the cutting edges (43) of which lie in a cylindrical envelope surface, and wherein the other roller (37) has a resilient surface.

5. Equipment according to claim 4, characterised thereby that a monitoring equipment (45) for registration of the position of the leading end of the respective fillet (46) to be processed is provided.

6. Equipment according to claim 5, characterised thereby that the knife roller (40) has a regulable drive, which can be regulated limited in time with respect to its rotational speed in dependence on the position of the leading end of the respective fillet to be processed.

7. Equipment for the carrying out of the method according to claim 3, comprising a skinning device (1) with a conveyor (20) for the conveying of the double fillets by engagement at the skin in the region of the incisions along the dorsal line, characterised thereby that a cutting equipment (25), which comprises at least one respective rotationally driven beater knife (26) effective at each of the two sides of the conveyor (20), is connected upstream of the skinning device (1), wherein the rotational axes (28) are oriented substantially parallel to the conveyor plane of the conveyor (20) and are so arranged that the rotating surfaces of the beater knives (26) leave a spacing in the region of their maximum mutual approach, which spacing extends substantially symmetrically of the conveyor (20).

8. Equipment according to claim 7, characterised thereby that the conveyor (20) is associated with the cutting equipment (25) and comprises a pair of narrow endless belts (5) which are driven to circulate and are guided in grooves of a support rail (24) for the conveying grip of the skin between the endless belts and the support rail by dipping of the endless belts into the incisions at both sides of the dorsal line of the double fillet.

9. Equipment according to one of claims 7 to 8, characterised thereby that a flat belt (30), which is disposed opposite the pair of endless belts (5) and synchronously driven, is provided at least in the region of the cutting equipment (25).

10. Equipment according to one of claims 7 to 9, characterised thereby that the beater knives (26) are rotatably arranged to dip into the flanks of the support rail (24).

11. Equipment according to one of claims 7 to 10, characterised thereby that the rotational speed of the beater knives (26) is regulable.

12. Equipment according to one of claims 7 to 11, characterised thereby that a monitoring equipment (45) for the registration of the position of the leading end of the respective double fillet (46) to be processed is provided.

13. Equipment according to claim 12, characterised thereby that the beater knives (26) have respective regulable drives, which can be regulated limited in time with respect to their speed in dependence on the position of the leading edge of the respective fillet to be processed.

14. Equipment according to one of claims 4 to 13, characterised thereby that it is arranged with the conveyor (20) or with the conveyor belt (35) adjoining the outlet region of a filleting machine.

## Revendications

1. Procédé de découpe, en morceaux de filets, de filets de poissons non écorchés,
**caractérisé en ce que** l'on effectue dans les filets de poissons des découpes de tracé transversal à leur extension longitudinale, la peau étant laissée solidaire, et en ce que les filets sont ensuite écorchés.

2. Procédé selon la revendication 1,
**caractérisé en ce que** les découpes sont effectuées depuis le côté chair sensiblement jusque sur la face intérieure de la peau, la distance des découpes entre elles correspondant à la longueur der morceau souhaitée pour les morceaux de filets, et en ce que les morceaux de filets ainsi préparés sont ensuite séparés par écorchement.

3. Procédé de découpe de filets doubles non écorchés de poissons, dans lesquels les deux filets sont maintenus solidaires sur la ligne dorsale et sont découpés jusqu'à la peau sur les deux côtés et sur selon la longueur de ces côtés,
**caractérisé en ce que** les découpes sont réalisées selon un tracé sensiblement perpendiculaire à la ligne dorsale et en séparant la chair et la peau, la zone proche de la zone dorsale étant seule laissée non découpée.

4. Installation destinée à la mise en oeuvre du procédé selon l'une des revendications 1 ou 2,
**caractérisé** par un dispositif d'écorchement (32, 33, 34) et un dispositif de découpe monté en amont (39), qui comprend une paire de rouleaux disposés l'un au-dessus de l'autre (37 et 40), pouvant être entraînés en rotation en sens opposés autour d'axes parallèles entre eux, qui viennent en contact sous une pression définie l'un contre l'autre ou sur un transporteur se déplaçant entre les rouleaux (37 et 40), un rouleau (40) étant réalisé sous forme de rouleau à couteaux, les lames de couteaux (42) dont les tranchants (43) sont situés dans une surface d'enveloppe cylindrique s'étendant de manière sensiblement radiale, et l'autre rouleau (37) présentant une surface élastique.

5. Installation selon la revendication 4,
**caractérisé en ce** qu**'**il est prévu une installation de surveillance (45) pour aligner la position de l'extrémité tournée vers l'avant du filet respectif (46) à traiter.

6. Installation selon la revendication 5,
**caractérisé en ce que** le rouleau à couteaux (40) présente un entraînement réglable qui est réglable de manière limitée dans le temps, en ce qui concerne leur vitesse de rotation, en fonction de la position de l'extrémité tournée vers l'avant du filet respectif à traiter.

7. Installation destinée à la mise en oeuvre du procédé selon la revendication 3, comprenant un dispositif d'écorchement (1) comportant un transporteur (20) pour transporter les filets doubles en les saisissant par la peau dans la zone des découpes le long de la ligne dorsale,
**caractérisée en ce** qu**'**il est monté en amont du dispositif d'écorchement (1), sur chacun des deux côtés du transporteur (20), une installation de découpe (25) qui comprend au moins deux couteaux frappeurs (26) entraînés en rotation agissant chacun sur l'un des deux côtés du transporteur (20), les axes de rotation (28) étant orientés sensiblement parallèlement au plan de transport du transporteur (20) et étant disposés d'une manière telle que les surfaces parcourues par les couteaux frappeurs (26) laissent entre elles, dans la zone où elles sont les plus proches l'une de l'autre, une distance qui s'étend sensiblement de façon symétrique par rapport au transporteur (20).

8. Installation selon la revendication 7,
**caractérisée en ce que** le transporteur (20) est associé à l'installation de découpe (25) et comprend une paire de petites bandes transporteuses sans fin (5) entraînées en circulation, qui sont guidées dans des rainures d'un rail d'appui (24) pour saisir en la transportant la peau entre les bandes transporteuses sans fin et le rail d'appui en faisant plonger les bandes sans fin dans les découpes situées sur les deux côtés de la ligne dorsale du filet double.

9. Installation selon l'une des revendications 7 et 8,
**caractérisée en ce** qu'il est prévu, dans la zone de l'installation de découpe (25), une courroie plate (30) entraînée de façon synchrone opposée à la paire de courroies sans fin (5).

10. Installation selon l'une des revendications 7 à 9,
**caractérisée en ce que** les couteaux frappeurs (26) sont disposés pour pouvoir tourner en plongeant dans les flancs du rail d'appui (24).

11. Installation selon l'une des revendications 7 à 10,
**caractérisée en ce que** la vitesse de circulation des couteaux frappeurs (26) est réglable.

12. Installation selon l'une des revendications 7 à 11,
**caractérisée en ce** qu'il est prévu une installation de surveillance (45) pour aligner la position de l'extrémité tournée vers l'avant du filet double respectif à traiter (46).

13. Installation selon la revendication 12,
**caractérisée en ce que** les couteaux frappeurs (26) présentent tous deux des entraînements réglables qui sont réglables de manière limitée dans le temps, en ce qui concerne leur vitesse de rotation, en fonction de la position de l'extrémité tournée vers l'avant du filet respectif à traiter.

14. Installation selon l'une des revendications 4 à 13,
**caractérisée en ce** qu'elle est disposée de manière à se raccorder au transporteur (20) ou à la bande transporteuse (35) dans la zone de sortie d'une machine de production de filets.
